# EUROPEAN PATENT APPLICATION

(11) **EP 1 652 816 A1**
(43) Veröffentlichungstag der Anmeldung: **03.05.2006**
(21) Anmeldenummer: 04748961.2
(22) Anmeldetag: 13.07.2004
(51) Int. Cl.: C01B 31/04, C25B 1/00

(54) **VERFAHREN ZUR HERSTELLUNG VON OXIDIERTEM GRAPHIT**

(30) Priorität: 14.07.2003 RU 2003121292
(71) Anmelder: Avdeev, Viktor Vasilievich, Moscow, 117513 (RU)
(72) Erfinder: AVDEEV, Viktor Vasilievich, Moscow, 117513 (RU); FINAENOV, Alexandr Ivanovich, Saratov, 410028 (RU); SOROKINA, Nataliya Evgenievna, Moscow, 119607 (RU); KRASNOV, Vladimir Vasilievich, Engels, 413105 (RU); YAKOVLEV, Andrey Vasilievich, Saratov, 410005 (RU); IONOV, Sergey Gennadievich, Moscow, 125557 (RU); SEZEMIN, Vladimir Alekseyevich, Kirovo-Chepetsk, 613040 (RU); SEZEMIN, Aleksey Vladimirovich, Kirovo-Chepetsk, 613040 (RU); MAKSIMOVA, Nataliya Vladimirovna, Moscow, 117342 (RU); NIKOLSKAYA, Irina Viktorovna, Moscow, 117296 (RU)
(74) Vertreter: Andrae, Steffen
(86) Internationale Anmeldenummer: PCT/RU2004/000267
(87) Internationale Veröffentlichungsnummer: WO 2005/007573

(57) **Zusammenfassung**

Die vorliegende Erfindung bezieht sich auf die Technologie der Graphitkohlenstoffmaterialien, insbesondere auf die Herstellung von oxidiertem Graphit mit einer niedrigen Schaumbildungstemperatur für die Herstellung von Schaumgraphit, der bei der Herstellung einer biegsamen Folie, als Flammschutzmaterial, Sorptionsmittel für die Wasserreinigung, für das Sammeln von Erdölprodukten u.a.m. seine Anwendung findet. Das Verfahren zur Herstellung von oxidiertem Graphit mit einer niedrigen Schaumbildungstemperatur umfaßt die Herstellung einer Mischung von Graphitteilchen und mindestens einer wäßrigen Lösung einer Säure; die Aktivierung der Oberfläche der Graphitteilchen unter Erzeugung sauerstoffhaltiger funktioneller Gruppen auf der Oberfläche der Teilchen; deren anschließende Behandlung zur Erzeugung einer Graphit-Einlagerungsverbindung; das Auswaschung der erzeugten Verbindung mit Wasser, und ihre Trocknung, sowie ihre anschließende thermische Behandlung zur Herstellung von Schaumgraphit, wobei die Stufen (b) und (c) mittels einer elektrochemischen Behandlung unter Zufuhr einer Stromgesamtmenge von 200 bis 600 mA·h/g Graphit durchgeführt werden. Das technische Ergebnis ist die Herstellung eines oxidierten Graphits mit verbesserten Eigenschaften, insbesondere mit einer hohen Homogenität, einer niedrigen Schüttdichte sowie mit der Fähigkeit der Schaumbildung bei Temperaturen von 150 bis 260°C.

## Beschreibung

### Gebiet der Technik.

Die vorliegende Erfindung bezieht sich auf die Technologie der Kohlengraphitstoffe, insbesondere auf die Herstellung von oxidiertem Graphit mit einer niedrigen Schaumbildungstemperatur für die Produktion von Schaumgraphit, der bei der Herstellung einer biegsamen Folie, als Sorptionsmittel für die Wasserreinigung, für das Sammeln von Erdölprodukten, als Flammschutzmaterial u.a.m. Anwendung findet.

### Stand der Technik.

Oxidierter Graphit stellt ein Hydrolyseprodukt von Graphit-Einlagerungsverbindungen mit starken anorganischen Säuren, beispielsweise Schwefelsäure und Salpetersäure, dar.

Auf der Basis von oxidiertem Graphit stellt man Schaumgraphit her - ein äußerst leichtes chemisch inertes Material, das ein thermisch expandierter Graphit ist.

Das Material bildet sich bei einer schnellen Erwärmung von oxidiertem Graphit.

Oxidierter Graphit kann durch eine Behandlung von Graphit in wäßrigen Lösungen starker Säuren, beispielsweise von Schwefelsäure und Salpetersäure, in Anwesenheit von Oxidationsmitteln oder durch eine elektrochemische Behandlung erhalten werden.

Für die Erzielung des Effektes der Schaumbildung wird der oxidierte Graphit bei Temperaturen von etwa 900 - 1000°C thermisch behandelt.

Beispielsweise ist in der US-PS 4350576 ein Verfahren zur Herstellung von Schaumgraphit offenbart, das eine elektrochemische Behandlung durch anodische Oxidation von Graphit in wäßrigen Lösungen von H₂SO₄ oder HNO₃ bei einer gleichbleibenden Stromdichte von weniger als 500 mA/cm² im Laufe von 6 bis 7 Stunden, eine anschließende Auswaschung mit Wasser, die Trocknung und thermische Behandlung umfaßt.

Die Schüttdichte von dem nach dem gegebenen Verfahren hergestellten Schaumgraphit beträgt 4 bis 6 g/l.

Die Nachteile dieses Verfahrens sind die Dauer des Prozesses der elektrochemischen Behandlung, die Inhomogenität des erhaltenen Produktes sowie eine unbefriedigende Schüttdichte des Produkts und das Fehlen der Schaumbildungsfähigkeit bei verhältnismäßig niedrigen Temperaturen (150-250°C).

In den letzten Jahren ist eine Anzahl von Veröffentlichungen erschienen, in welchen die Rede von der Herstellung eines oxidierten Graphits für die Herstelung von Schaumgraphit ist, der durch eine niedrige Schaumbildungstemperatur gekennzeichnet ist. Insbesondere wird in der GB-PS 2367291 ein Verfahren zur Herstellung eines oxidierten Graphits offenbart, das eine Vorbehandlung des Ausgangsgraphits mit organischen Säuren der allgemeinen Formel H(CH₂)COOH, worin n Werte von 0 bis 5 aufweist, sowie eine anschließende elektrochemische Behandlung in einer wäßrigen Lösung einer 30-50%-igen H₂SO₄ bei einer gleichbleibenden Stromdichte von bis 0,06 A/m², eine anschließende Auswaschung mit Wasser, Trocknung und eine thermische Behandlung einschließt. Dementsprechend wird in der erwähnten Patentschrift ein nach dem angegebenen Verfahren hergestellter Schaumgraphit mit einer Schüttdichte von 3-5 g/l offenbart. Der Schaumgraphit weist die Fähigkeit auf, bei niedrigen Temperaturen zu schäumen.

Den Nachteilen der vorbekannten technischen Lösung kann die Tatsache zugerechnet werden, daß die Verwendung der organischen Verbindungen bei der Vorbehandlung das Verfahren beträchtlich kompliziert, weil zusätzliche Ausrüstungen erforderlich sind, die eine geringe Menge von organischen Zusatzstoffen über die ganze Masse des Ausgansgraphits gleichmäßig verteilen können, wobei jedoch selbst in diesem Fall ist Wahrscheinlichkeit groß ist, dass ein inhomogener Rohstoff, und damit auch ein inhomogener Schaumgraphit erhalten werden. Darüber hinaus entsteht bei der Behandlung gemäß dem erwähnten Verfahren das Problem der Verwertung von vermischten saueren Abfallprodukten, was das Verfahren ebenfalls bedeutend verteuert.

### Offenbarung der Erfindung

Der Erfindung liegt die Aufgabe der Herstellung eines oxidierten Graphits mit verbesserten Eigenschaften, insbesondere mit einer hohen Homogenität, einer niedrigen Schüttdichte sowie der Fähigkeit zur Schaumbildung bei Temperaturen ab 150°C sowie der Erhöhung der Produktivität des Prozesses durch die Verkürzung der Zeit für die elektrochemische Behandlung zugrunde. Ein solcher Graphit ist besonders für Flammschutzerzeugnisse (beispielsweise zum Einrichten von Kabeldurchführungen, in Brandschutzverbindungsmuffen u.ä.) geeignet, weil es die niedrige Temperatur der Schaumbildung erlaubt, Zusammensetzungen zu erzeugen, das das Entflammen frühzeitig wirksam unterbinden.

Die gestellte Aufgabe wird durch ein Verfahren zur Herstellung von oxidiertem Graphit mit einer niedrigen Schaumbildungungstemperatur für die Herstellung von Schaumgraphit gelöst, das die Stufen aufweist: (a) Herstellung einer Mischung auf der Basis von Graphitteilchen und mindestens einer wäßrigen Lösung einer starken Säure; (b) Aktivierung der Oberfläche der Graphitteilchen unter Erzeugung sauerstoffhaltiger funktioneller Gruppen auf der Oberfläche der Teilchen; (c) deren anschließende Behandlung zur Erzeugung einer Graphit-Einlagerungsverbindung; (d) Auswaschen der erwähnten Verbindung mit Wasser, und (e) deren Trocknung, wobei die Stufen (b) und (c) mittels einer elektrochemischen anodischen Behandlung unter Zufuhr einer Stromgesamtmenge von mindestens 200 mA·h/g Graphit durchgeführt werden.

Gemäß spezieller Ausführungsformen der Erfindung wird die gestellte Aufgabe durch ein Verfahren gelöst, bei dem die Stufen (b) und (c) in einem kontinuierlichen Prozeß unter Zufuhr einer Stromgesamtmenge von 300 bis 600 mA·h/g Graphit durchgeführt werden.

Nach Stufe (e) ist die Durchführung der thermischen Behandlung des oxidierten Graphits bei einer Temperatur von 150 bis 260°C zur Erzeugung von Schaumgraphit möglich.

Die Stufen (a) und (b) lassen sich nach potentiostatischen oder galvanostatischen Verfahrensweisen realisieren, wobei es zweckmäßig ist, Stufe (a) unter Zufuhr von bis zu 20% der Stromgesamtmenge durchzuführen.

Wenn die Stufen (b) und (c) nach der potentiostatischen Verfahrensweise durchgeführt werden, so wird Stufe (b) mit einem Potential durchgeführt, das das Potential auf Stufe (c) mindestens um das 1,1-fache übersteigt.

In diesem Fall ist es möglich, die Stufen (b) und (c) in einer wäßrigen Lösung von Schwefelsäure mit einer Konzentration von 40 bis 80 % unter Zufuhr einer Strommenge von 300 bis 500 mA·h/g Graphit durchzuführen, wobei Stufe (b) bei einem Potentialwert von 1,8 bis 2,3 V und Stufe (c) bei einem Potentialwert von 1,6 bis 2,0 V durchgeführt werden.

In einem solchen Fall ist es auch möglich, die Stufen (b) und (c) in einer wäßrigen Lösung von Salpetersäure mit einer Konzentration von 20 bis 58 % unter Zufuhr einer Strommenge von 300 bis 500 mA·h/g Graphit durchzuführen, wobei Stufe (b) bei einem Potentialwert von 2,1 bis 2,5 V und Stufe (c) bei einem Potentialwert von 1,5 bis 1,8 V durchgeführt werden.

Wenn man die Stufen (b) und (c) nach der galvanostatischen Verfahrensweise durchführt, so führt man Stufe (b) mit einem Stromwert durch, der den Stromwert auf Stufe (c) mindestens um das 1,1-fache übersteigt.

In diesem Fall werden die Stufen (b) und (c) in einer wäßrigen Lösung von Schwefelsäure mit einer Konzentration von 40 bis 80 % unter Zufuhr einer Strommenge von 300 bis 500 mA·h/g Graphit durchgeführt, wobei Stufe (b) mit einem Stromwert von 80-160 mA/g Graphit bis zur Erreichung eines Potentials, das 2,5 V nicht übersteigt, und Stufe (c) mit einem Stromwert von 40 bis 80 mA/g Graphit bis zur Erreichung eines Potentials, das 2,3 V nicht übersteigt, durchgeführt werden.

Die gestellte Aufgabe wird auch durch ein Verfahren zur Herstellung von oxidiertem Graphit mit einer niedrigen Schaumbildungstemperatur für die Herstellung von Schaumgraphit gelöst, das die Stufen aufweist: (a) Herstellung einer Mischung auf der Basis von Graphitteilchen und mindestens einer wäßrigen Lösung von Salpetersäure mit einer Konzentration von 20 bis 58 %; (b) elektrochemische Anodenbehandlung zur Vorbehandlung der Graphitteilchen in der wäßrigen Lösung von Salpetersäure für die Aktivierung der Graphitoberfläche; (c) elektrochemische Anodenbehandlung zur Hauptbehandlung der Graphitteilchen in der wäßrigen Lösung von Salpetersäure; (d) Auswaschen der Graphitteilchen mit Wasser; und (e) deren Trocknung, wobei die Stufen (b) und (c) bei einem gleichbleibenden anodischen Potential unter Zufuhr einer Stromgesamtmenge von 300 bis 500 mA·h/g Graphit durchgeführt werden.

Nach der Trocknung nimmt man eine thermische Behandlung des oxidierten Graphits bei einer Temperatur von 150 bis 260°C vor.

Die Stufe (b) führt man mit einem Potential von 2,1 bis 2,5 V für 10 bis 600 s durch, und Stufe (c) mit einem Potential von 1,5 bis 1,8 V für von 3 bis 7 Stunden.

### Beschreibung der Zeichnungen

In Fig. 1 sind die Daten des Infrarot-(IR)-Spektrums der frei werdenden Gasphase bei der Zersetzung einer Probe eines oxidierten Graphits gezeigt, der durch elektrochemische Oxidation von Graphit in einer 58%-igen Salpetersäure erhalten wurde.

In Fig. 2 ist eine DSC-TG-Kurve einer Probe eines oxidierten Graphits gezeigt, der durch elektrochemische Oxidation von Graphit in einer 70%-igen H₂SO₄ erhalten wurde.

In Fig. 3 ist DSC-TG-Kurve einer Probe eines oxidierten Graphits gezeigt, der durch elektrochemische Oxidation von Graphit in einer 80%-igen H₂SO₄ erhalten wurde.

In Fig. 4 ist eine DSC-TG-Kurve einer Probe eines oxidierten Graphits gezeigt, der durch elektrochemische Oxidation von Graphit in einer 58%-igen Salpetersäure erhalten wurde.

Das Wesen der Erfindung besteht in folgendem:
Aufgrund der vorgenommenen Untersuchungen haben wir festgestellt, daß ein oxidierter Graphit, der in wäßrigen Lösungen starker Säuren (HNO₃, H₂SO₄) mit einer vorausgehenden Aktivierung der Obenfläche erhalten wurde, nach seiner Auswaschung mit Wasser und Trocknung in der Lage ist, bei Temperaturen ab 150°C zu expandieren.

Die Besonderheiten der Synthese der thermoexpandierenden Verbindungen mit einer erniedrigten Temperatur der Schaumgraphiterzeugung bestehen darin, daß der Prozeß der Bildung von Graphit-Einlagerungsverbindungen (GEV) von einer Sauerstoffentwicklung mit einer geringen Geschwindigkeit begleitet wird. In diesem Fall ist der sich entwickelnde Sauerstoff in seinem adsorbierten atomaren Zustand in der Lage, vor einer Rekombination mit dem Kohlenstoff der Oberfläche der Graphitteilchen in Wechselwirkung zu treten, wobei er sich in Form von sauerstoffhaltigen funktionellen Gruppen ansammelt.

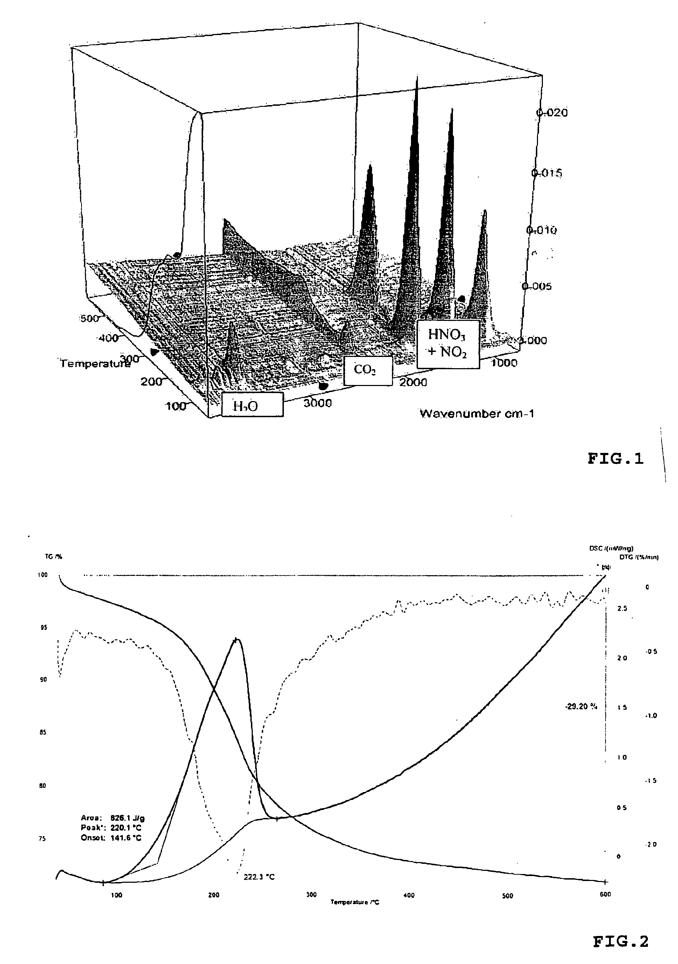

Eine Bestätigung dieser Tatsachen sind die Daten der Infrarotspektroskopie der sich entwickelnden Gase (Fig.1). Im Anfangsmoment wird die Zersetzung des oxidierenden Graphits vom Freiwerden einer Dampf-Gasphase (CO₂, H₂O begleitet, welche auch als Treibmittel wirkt.

Die Sauerstoffentwicklung ist ohne Adsorption von Wassermolekülen auf der Graphitoberfläche unmöglich. Das adsorbierte Wasser beteiligt sich auch an den Prozessen der Interkalierung, indem es zusammen mit den Anionen der Säure eingelagert wird. Der Sauerstoff, der in die Zwischenschichträume der Graphitenmatrix als Bestandteil des Interkalats gelangt, ist auch in der Lage, kovalenten Bindungen mit den Kohlenstoffatomen zu bilden, wobei die Polyarennetze teilweise verformt werden.

Die Ansammlung von Sauerstoff auf der Graphitoberfläche und der Eintritt desselben in das Interkalat als dessen Bestandteil führt somit dazu, daß sich CO und CO₂ bei Temperaturen von 130 bis 180°C zu entwickeln beginnen. Außerdem erhöhen die Blockierung der Zwischenschichtenräume über die Oberfläche der Teilchen, die teilweise Verformung der Kohlenstoffschichten die Wirksamkeit von Treibmitteln.

Der Impuls für die Bildung der Kohlenstoff-Schaumstrukturen bei der thermischen Behandlung ist die Entfernung der Oberflächengruppen, die zur Schichtentrennung und Verformung der Kohlenstoffnetze führt, was ihr vollkommenes Zerreißen unter Einwirkung der Produkte der Interkalatthermolyse erleichtert.

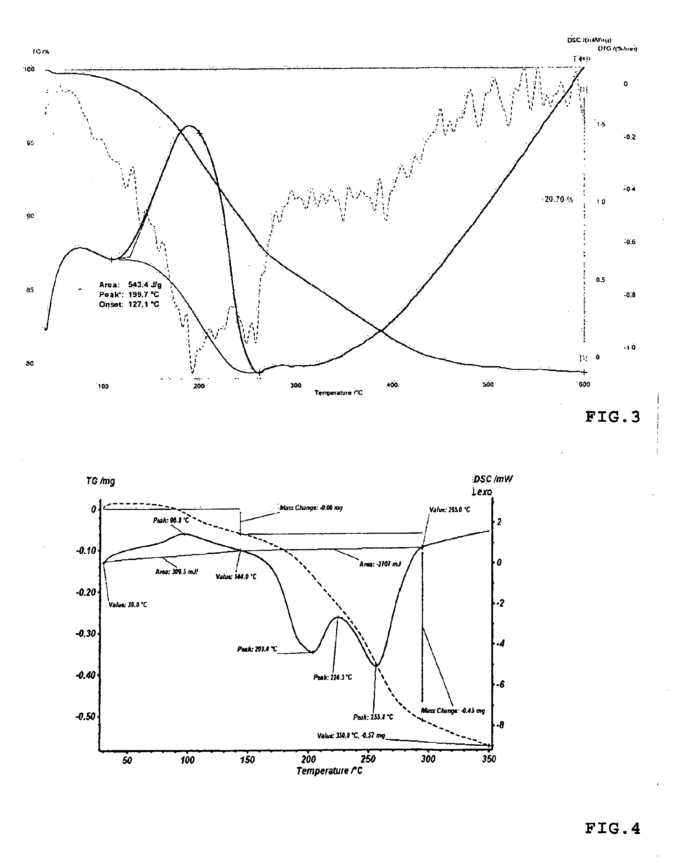

Die vorhandenen Angaben der thermischen Analyse (synchroner Thermoanalysator der Firma NETSZCH STA 449c Jupiter) zeigen eindeutig, daß die Temperatur des Zersetzungsbeginns und damit auch der Expansion für das in 80 %-iger Schwefelsäure erhaltene Produkt 127,5°c, für das in 70 %-iger Schwefelsäure erhaltene Produkt 140,2°C und für das in 58 %- iger Salpetersäure erhaltene Produkt 144°C beträgt (vgl. die Figuren 2 bis 4).

Der prinzipielle Unterschied der oxidierten Graphite, die durch die elektrochemische Behandlung in wäßrigen Lösungen von Säuren mit einer vorgeschalteten Aktivierung der Oberfläche erhalten werden, ist das Vorhandensein auf der DSC-Kurve (differential scanning calorimetry; dynamische Differenz-Kalorimetrie) von Exoeffekten, die für Graphitoxid charakteristisch sind, während die oxidierten Graphite, die nach dem herkömmlichen Verfahren in konzentrierten Säuren erhalten werden, bei der Zersetzung durch das Vorhandensein nur von Endoeffekten mit einer Temperatur des Zersetzungsbeginns von über 200°C gekennzeichnet sind.

Wenn die in den Stufen (b) und (c) zugeführten Strommengen klein sind (Q < 200 mA·h/g Graphit), so ist der Sauerstoffgehalt in den Verbindungen ungenügend, und es ist auch unmöglich, die elektrochemische Durcharbeitung der Struktur der ganzen Graphitmasse durchzuführen.

Wenn Q > 600 mA·h/g Graphit beträgt, so nimmt die Kohlenstoffausbeute stark ab, weil ein beträchtlicher Teil desselben (bis zu 30-40 %) sich in Form von CO und CO₂ verflüchtigt. Darüber hinaus ist eine weitere Erhöhung des Q-Werts wegen des hohen Stromverbrauchs unrationell.

Beide Behandlungen - die Aktivierung der Oberfläche (b) und die Behandlung zwecks Bildung von Graphit-Einlagerungsverbindungen (GEV) (c) werden in einem einheitlichen kontinuierlichen Prozeß durchgeführt.

Wie-die Experimente gezeigt haben, führt die anodische Graphitbehandlung in verdünnten wäßrigen Lösungen von Säuren, beispielsweise von Schwefelsäure oder Salpetersäure, bei einem gleichbleibenden Potential unter Zufuhr einer Strommenge von mindestens 200 mA·h/g Graphit zur Bildung von Übergangsformen von Graphitnirat oder -bisulfat bis hin zu Graphitoxid (OG) mit einer nicht-stöchiometrischen Zusammensetzung.

Auf dem Stufe (b) spielt der Prozeß der Wasserelektrolyse unter Entwicklung von atomarem Sauerstoff eine große Rolle, der unter diesen Verhältnissen keine Zeit für eine Rekombination zu seiner molekularen Form hat und hochaktiv auf den Graphit einwirkt. Für die Erreichung des angegebenen Prozesses genügt es, bis zu 20% der Stromgesamtmenge zuzuführen.

Die Voraussetzung für die Erreichung der Aktivierung der Oberfläche der Graphitteilchen (Stufe (b)) ist nicht nur die Durchführung dieser Vorbehandlungsstufe unter Zufuhr einer Strommenge von bis 20% der Gesamtmenge des Stroms, sondern auch die Durchführung der Behandlung bei höheren Potentialwerten als in der Hauptstufe (c) (im Falle einer potentiostatischen Verfahrensweise), oder bei höheren Stromwerten (im Falle einer galvanostatischen Verfahrensweise), was zu einer schnellen Vorbereitung der Graphitmatrix (zur Aufladung der elektrischen Doppelschicht, Oxidation der Oberfläche, Bildung oberflächlicher sauerstoffhaltiger funktioneller Gruppen) für den weiteren Prozeß der Interkalierung (Hauptstufe (c)) führt.

Beispielsweise wird auf Stufe (b) zu Beginn der anodischen Graphitoxidation bei der potentiostatischen Verfahrensweise im Laufe einer relativ kurzen Zeitspanne das Potential E_{b} vorgegeben, das das Potential E_{c}, bei welchem die Hauptstufe der Behandlung durchgeführt wird, um das 1,1-bis 1,7-fache übersteigt.

Im Falle der Durchführung des Prozesses nach der galvanostatischen Verfahrensweise wird die Aktivierung (b) durch die Einwirkung mit den hohen Stromwerten von 80-160 mA/g Graphit verwirklicht, und Stufe (c) wird bei kleineren Stromwerten, etwa um das Zweifache, realisiert.

Die Anwesenheit von Wasser in der Salpetersäure oder Schwefelsäure übt einen günstigen Einfluß auf die Synthese dieser nicht-stöchiometrischen Zwischenverbindungen aus, welche durch einen erhöhten Sauerstoffgehalt auf der Oberfläche der festen Phase in Form von oberflächlichen funktionellen Gruppen (-C-OH, -CO(OH) u.a.m) sowie auch im Inneren der eingelagerten Schicht gekennzeichnet sind.

Als optimale Bedingungen für die Herstellung von Schaumgraphit, der eine niedrige Schüttdichte bei einer Temperatur der Schaumbildung von 150 bis 260°C aufweist, erweisen sich eine Durchführung der Stufen (b) und (c) der anodischen Behandlung in H₂SO₄ mit einer Konzentration von 40-80% oder in HNO₃ mit einer Konzentration von 20 bis 58% (Masse-%).

Die Überschreitung dieser Konzentrationen zieht die Bildung der herkömmlichen Graphit-Einlagerungsverbindungen nach sich, die nicht von einer aktiven Einwirkung von atomarem Sauerstoffe und einer Ansammlung von oberflächlichen funktionellen Gruppen begleitet ist, welche eine Schaumbildung bei einer Temperatur ab 150°C sicherstellen. In den konzentrierten Lösungen ist der Wassergehalt gering, infolgedessen sind auch die Entwicklung von aktivem Sauerstoff und die Miteinlagerung von Wassermolekülen in die Graphitmatrix unter Bildung der Übergangsformen und des Graphitoxids erschwert, die die Eigenschaft einer "Tieftemperatur"-Schaumbildung dann nicht besitzt.

Die Erniedrigung der Konzentration unter die anmeldungsgemäßen Werte ist ebenso unerwünscht, weil das zur Vergrößerung der zuzuführenden Strommenge (Q) und zur Erhöhung des Potentials führt, sowie zu einem aktiveren Verlauf der Hydrolyseprozesse der sich bildenden Einlagerungsverbindungen, und sich negativ auf di Eigenschaften von Schaumgraphit auswirkt.

Der erfindungsgemäß erhaltene Bildung von oxidiertem Graphit besitzt bei der Bildung von Schaumgraphit die Eigenschaft der Schaumbildung bei einer relativ niedrigen Temperatur der thermischen Behandlung, und zwar ab 150°C.

Eine charakteristische Besonderheit der anmeldungsgemäßen Erfindung ist ferner die Möglichkeit, als Rohstoff Graphit mit einer breiten Fraktionszusammensetzung zu verwenden.

Gute Ergebnisse wurden bei der Verwendung von Graphit mit einer Teilchengröße von unter 0,3 mm erzielt, was es erlaubt, für den Herstellungsprozeß des oxidierten Graphits, wie auch des Schaumgraphits auf seiner Basis, billigere Graphitsorten heranzuziehen.

Die Erfindung kann anhand den nachfolgenden Beispielen veranschaulicht werden.

### Beispiel 1.

In den Elektrolysator, der eine Anodenarbeitskammer aufweist, die zwischen der Stromabführung der Anode und einem beweglichen Kolben mit einem Diaphragma angeordnet ist, sowie eine im Elektrolyt oberhalb des Kolbens angeordnete Kathode, gibt man 25 ml 58%-ige HNO₃ und 10 g natürlichen Graphit mit folgender Fraktionszusammensetzung: 80% 200-290 µm und 20% weniger als 200 µm, und es wird eine anodische Behandlung des Graphits nach der potentiostatischen Verfahrensweise vorgenommen. Auf Stufe (b) (Aktivierung der Oberfläche) wird im Laufe von 15 s ein Potential E_{b} = 2,1 vorgegeben. Danach führt man Stufe (c) der elektrochemischen Behandlung zur Erzeugung von GEV beim Potential E_{c} = 1,75 V für 5 Stunden bei Q = 400 mA·h/g Graphit durch. Der Druck auf den Kolben beträgt 0,2 kg/cm². Dann wird das erhaltene Produkt mit Wasser ausgewaschen, getrocknet und bei 200°C thermisch behandelt. Es wird ein thermoexpandierter Graphit mit einer Schüttdichte von 1,7 g/l erhalten.

### Beispiele 2-4.

Eine anodische Behandlung wird in Säure mit einer Konzentration von 35 bis 40% in zwei Stufen, mit Q von 300 bis 420 mA·h/g Graphit und Temperaturen der Schaumbildung von 200 bis 250°C durchgeführt. Es wird Graphitpulver mit einer durchschnittlichen Teilchengröße von 200 µm behandelt.

Die Verhältnisse der Behandlung in den Beispielen 2 bis 4 und die erhaltenen Ergebnisse sind in der Tabelle 1 zusammengefaßt.

### Beispiel 5.

In die Arbeitskammer eines Elektrolysators, die zwischen der Anode und der einen dicht anliegenden Separator aus einem Polypropylengewebe aufweisenden Kathode angeordnet ist, werden 2 kg einer Mischung von Graphit mit 80%-iger Schwefelsäure gegeben, die in einem Verhältnis von 1:1,6 genommen werden.

Die Graphitsuspension wird nach der galvanostatischen Verfahrensweise anodisch behandelt. Stufe (b) (Aktivierung der Oberfläche) wird unter einer Stromeinwirkung von 160 mA/g Graphit bis zur Erreichung des Anodenpotentials E_{b} = 2,3 V durchgeführt (im Laufe von ungefähr 2 Stunden), danach unter Stromverminderung bis auf ungefähr 80 mA/g Graphit wird Stufe (c) (Bildung von GEV) durchgeführt. Die Spannung am Elektrolysator änderte sich während des Synthesenprozesses in den Grenzen von 3,5-4,5 V. Die Gesamtzeit der Behandlung beträgt 9 Stunden, Q = 450 m·Ah/g Graphit. Der Druck auf den Kolben beträgt 0,2 kg/cm².

Anschließend wird das erhaltene Produkt mit Wasser ausgewaschen, getrocknet und bei 250°C thermisch behandelt. Es wird ein Graphit mit einer Schüttdichte von ca. 1,6 g/l erhalten.

### Beispiel 6.

Die Anodenbehandlung der Graphitsuspension in 70 %-iger Schwefelsäure, die in einem Verhältnis von 1:1,6 genommen werden, wird in Übereinstimmung mit Beispiel 5 durchgeführt. Bei der Erreichung des Potentials von 2,1 V beginnt man mit der Stromverringerung, Stufe (c) wird bei E = 1,8 V begonnen.

Die Gesamtzeit der Behandlung wird auf 10 Stunden erhöht, Q = 520 mA h/g Graphit.

Anschließend wird das erhaltene Produkt mit Wasser ausgewaschen, getrocknet und bei 200°C thermisch behandelt. Es wird ein Graphit mit einer Schüttdichte von 2,0 bis 2,20 g/l erhalten.

### Beispiel 7.

Die Anodenbehandlung der Graphitsuspension in 60 %-iger Schwefelsäure, die in einem Verhältnis von 1:1,5 genommen werden, wird in Übereinstimmung mit Beispiel 5 durchgeführt, aber der Anfangsstrom der Polarisation beträgt auf dem Stufe der Aktivierung 80 mA/g Graphit, und mit seiner Verringerung beginnt man bei der Erreichung des Potentials von 1,9-2,0 V. Danach wird die Behandlung bei E = 1,7 V mit einem Strom von 40 mA/g Graphit durchgeführt.

Die Gesamtzeit der Behandlung wird auf 12 Stunden erhöht, Q = 480-500 mA·h/g Graphit.

Anschließend wird das erhaltene Produkt mit Wasser ausgewaschen, getrocknet und bei 200°C thermisch behandelt. Es wird ein Graphit mit einer Schüttdichte von 2,2 g/l erhalten.

### Beispiel 8.

Die Anodenbehandlung der Graphitsuspension in 50 %-iger Schwefelsäure, die in einem Verhältnis von 1:1,5 genommen werden, wird in Übereinstimmung mit Beispiel 7 durchgeführt, wobei man jedoch mit der Stromverringerung bei der Erreichung des Potentials von 1,8-1,9 V beginnt und danach die Behandlung bei E = 1,6 V mit einem Strom von 40 mA/g Graphit durchführt.

Die Gesamtzeit der Behandlung wird auf 14 Stunden erhöht, Q = 450-480 mA·h/g Graphit.

Anschließend wird das erhaltene Produkt mit Wasser ausgewaschen, getrocknet und bei 200°C thermisch behandelt. Es wird ein Graphit mit einer Schüttdichte von 2,9 g/l erhalten.

**Tabelle**

| Versuchsnummer | Konzentration von HNO₃, Masse-% | Elektrochemische Behandlung | | | | Q mA·h/g Graphit | Schüttdichte d, g/l (Temperatur der Schaumbildung °C) |
|---|---|---|---|---|---|---|---|
| | | Aktivierung der Oberfläche (b) | | Hauptstadium (c) | | | |
| | | E_{b}, V | T_{b}, s | E_{c}, V | T_{c}, Stunde n | | |
| 2 | 35 | 2,1 | 600 | 1,75 | 4 | 335 | 1,5 (200) |
| 3 | 35 | 2,5 | 10 | 1,65 | 6 | 420 | 2,2 (220) |
| 4 | 40 | 2,7 | 300 | 1,7 | 3 | 300 | 2,5 (160) |

Aus den in der Tabelle angeführten Beispielen und den Angaben in der Tabelle werden die nachfolgenden Erfindungsvorteile offensichtlich:
1. Die Möglichkeit der Schaumbildung bei Temperaturen von 150 bis 250°C.
2. Das Erzielen einer niedrigen Schüttdichte.
3. Das Heranziehen eines billigen Graphits mit einer Teilchengröße von ca. 200 µm für den Prozeß der Herstellung von Schaumgraphit, was es erlaubt, den Prozeß wesentlich zu verbilligen.

## Patentansprüche

1. Verfahren zur Herstellung von oxidiertem Graphit mit einer niedrigen Schaumbildungungstemperatur für die Herstellung von Schaumgraphit mit den Stufen
(a) Herstellung einer Mischung auf der Basis von Graphitteilchen und mindestens einer wäßrigen Lösung einer starken Säure;
(b) Aktivierung der Oberfläche der Graphitteilchen unter Erzeugung sauerstoffhaltiger funktioneller Gruppen auf der Oberfläche der Teilchen;
(c) deren anschließende Behandlung zur Erzeugung einer Graphit-Einlagerungsverbindung;
(d) Auswaschen der erwähnten Verbindung mit Wasser, und
(e) deren Trocknung,
wobei die Stufen (b) und (c) mittels einer elektrochemischen anodischen Behandlung unter Zufuhr einer Stromgesamtmenge von mindestens 200 mA·h/g Graphit durchgeführt werden.

2. Verfahren nach Anspruch 1, wobei die Stufen (b) und (c) in einem kontinuierlichen Prozeß unter Zufuhr einer Stromgesamtmenge von 300 bis 600 mA·h/g Graphit durchgeführt werden.

3. Verfahren nach Anspruch 1, wobei nach Stufe (e) eine themischen Behandlung des oxidierten Graphits bei einer Temperatur von 150 bis 260°C durchgeführt wird.

4. Verfahren nach Anspruch 1, wobei die Stufen (b) und (c) bei nach potentiostatischen oder galvanostatischen Verfahrensweisen unter Zufuhr einer Stromgesamtmenge von 300 bis 500 mA·h/g Graphit durchgeführt werden, wobei man Stufe (b) unter Zufuhr von bis 20% der Gesamtmenge des Stroms durchführt.

5. Verfahren nach Anspruch 4, wobei die Stufen (b) und (c) nach einer potentiostatischen Verfahrensweise durchgeführt werden, wobei Stufe (b) mit einem Wert des Potentials durchgeführt wird, der den Wert des Potentials auf Stufe (c) mindestens um das 1,1-fache übersteigt.

6. Verfahren nach Anspruch 5, wobei Stufe (b) mit einem Wert des Potentials von 1,7 bis 2,6 V, und Stufe (c) mit einem Werte des Protentials von 1,5 bis 2,0 V durchgeführt wird.

7. Verfahren nach Anspruch 6, wobei die Stufen (b) und (c) in einer wäßrigen Lösung von Schwefelsäure mit einer Konzentration von 40 bis 80 % durchgeführt werden, wobei man Stufe (b) mit einem Wert des Potentials von 1,8 bis 2,3 V und Stufe (c) mit einem Wert des Potentials von 1,6 bis 2,0 V durchführt.

8. Verfahren nach Anspruch 6, wobei die Stufen (b) und (c) in einer wäßrigen Lösung von Salpetersäure mit einer Konzentration von 20 bis 58% durchgeführt werden, wobei man Stufe (b) mit einem Wert des Potentials von 2,1-2,5 V und Stufe (c) mit einem Wert des Potentials von 1,5-1,8 V durchführt.

9. Verfahren nach Anspruch 4, wobei die Stufen (b) und (c) nach einer galvanostatischen Verfahrensweise durchgeführt werden, wobei Stufe (b) mit einem Stromwert durchgeführt wird, der drn Stromwert auf Stufe (c) mindestens um das 1,1-fache übersteigt.

10. Verfahren nach Anspruch 9, wobei die Stufen (b) und (c) in einer wäßrigen Lösung von Schwefelsäure mit einer Konzentration von 40 bis 80 % durchgeführt werden, wobei man Stufe (b) mit einem Stromwert von 80-160 mA/g Graphit bis zur Erreichung eines Potentials, das 2,5 V nicht übersteigt, und Stufe (c) mit einem Stromwert von 40 bis 80 mA/g Graphit bis zur Erreichung eines Potentials, das 2,3 V nicht übersteigt, durchführt.

11. Verfahren zur Herstellung von oxidiertem Graphit mit einer niedrigen Schaumbildungstemperatur für die Herstellung von Schaumgraphit, mit den Stufen:
(a) Herstellung einer Mischung auf der Basis von Graphitteilchen und mindestens einer wäßrigen Lösung von Salpetersäure mit einer Konzentration von 20 bis 58 %;
(b) elektrochemische Anodenbehandlung zur Vorbehandlung der Graphitteilchen in der wäßrigen Lösung von Salpetersäure zur Aktivierung der Graphitoberfläche;
(c) elektrochemischen Anodenbehandlung zur Hauptbehandlung der Graphitteilchen in der wäßrigen Lösung der Salpetersäure;
(d) Auswaschen der Graphitteilchen mit Wasser; und
(e) deren Trocknung,
wobei die Stufen (b) und (c) jeweils bei einem gleichbleibenden anodischen Potential unter Zufuhr einer Stromgesamtmenge von 300 bis 500 mA·h/g Graphit durchgeführt werden.

12. Verfahren nach Anspruch 11, wobei nach Stufe (e) die thermische Behandlung des oxidierten Graphits bei einer Temperatur von 150-260°C durchgeführt wird.

13. Verfahren nach Anspruch 11, wobei man Stufe (b) mit einem Potential von 2,1 bis 2,5 V im Laufe von 10 bis 600 s und Stufe (c) mit einem Potential von 1,5 bis 1,8 V im Laufe von 3 bis 7 Stunden durchführt.
